# EUROPÄISCHE PATENTSCHRIFT

(11) **EP 3 392 020 B1**
(45) Veröffentlichungstag und Bekanntmachung des Hinweises auf die Patenterteilung: **29.01.2020**
(21) Anmeldenummer: 18176112.3
(22) Anmeldetag: 31.03.2016
(51) Int. Cl.: B29C 64/214, B29C 64/35, B33Y 10/00, B33Y 30/00

(54) **VORRICHTUNG ZUM HERSTELLEN VON DREIDIMENSIONALEN OBJEKTEN DURCH AUFEINANDER-FOLGENDES VERFESTIGEN VON SCHICHTEN SOWIE EIN ZUGEHÖRIGES VERFAHREN**
DEVICE AND AN ASSOCIATED METHOD FOR PRODUCING THREE-DIMENSIONAL OBJECTS BY SOLIDIFYING LAYERS ONE AFTER THE OTHER
DISPOSITIF DE FABRICATION D'OBJETS TRIDIMENSIONNELS PAR DURCISSEMENT SUCCESSIF DE COUCHES AINSI QU'UN PROCÉDÉ ASSOCIÉ

(30) Priorität: 07.05.2015 DE 102015107178
(43) Veröffentlichungstag der Anmeldung: 24.10.2018
(62) Teilanmeldung aus: 16713437.8
(73) Patentinhaber: CL Schutzrechtsverwaltungs GmbH, 96215 Lichtenfels (DE)
(72) Erfinder: Herzog, Frank, 96215 Lichtenfels (DE); Dr. Bechmann, Florian, 96215 Lichtenfels (DE); Zeulner, Fabian, 96215 Lichtenfels (DE); LIPPERT, Markus, 96215 Lichtenfels (DE); Stammberger, Jens, 96472 Rödental (DE); Diller, Christian, 96215 Lichtenfels (DE)
(74) Vertreter: Hafner & Kohl Patent- und Rechtsanwälte Partnerschaft mbB

(56) Entgegenhaltungen:
- WO-A1-2014/191200
- DE-A1-102007 040 755

## Beschreibung

Die Erfindung betrifft eine Vorrichtung zum Herstellen von dreidimensionalen Objekten durch aufeinanderfolgendes Verfestigen von Schichten eines mittels Strahlung verfestigbaren Aufbaumaterials an den dem jeweiligen Querschnitt des Objektes entsprechenden Stellen, mit den weiteren Merkmalen des Oberbegriffes des Patentanspruches 1 sowie ein zugehöriges Verfahren.

Eine Vorrichtung der vorstehend bezeichneten Art weist zunächst ein Gehäuse auf, in dem eine Prozesskammer untergebracht ist. Unter der Ebene eines Prozesskammerbodens ist ein Baubehälter untergebracht, auf der Aufbaumaterial und ein Teilobjekt oder Objekt beim Herstellungsvorgang ruht. Darüber hinaus ist eine Aufbringvorrichtung vorgesehen, mit der Schichten des Aufbaumaterials auf die Tragevorrichtung vom Baubehälter oder eine zuvor gebildete Schicht aufgetragen werden. Eine Dosiereinrichtung dient dazu, Aufbaumaterial dem Beschichterelement der Aufbringvorrichtung zuzuführen. Das Beschichterelement fährt insbesondere linear über die Oberfläche des durch den Baubehälter definierten Baufeldes und verteilt das Aufbaumaterial als sehr dünne Schicht, die dann durch Bestrahlung mit einem fokussierten Laserstrahl an oder aufgeschmolzen wird und nach Abkühlung zur Bildung des Objektes erstarrt. Eine derartige Vorrichtung ist beispielsweise aus DE 10 2006 056 422.7 bekannt.

Die bekannten Vorrichtungen sind insofern nachteilig, als die durch den Beschichtungsvorgang erforderliche Belichtungspause einen relativ langen Zeitraum einnimmt.

DE 10 2007 040 755 A1 offenbart gemäß den Oberbegriffen der Ansprüche 1 und 15 eine Lasersintervorrichtung zum Herstellen von dreidimensionalen Objekten durch Verfestigen von aufeinanderfolgenden Schichten eines pulverförmigen Materials an den dem jeweiligen Querschnitt des Objekts entsprechenden Stellen mittels Laserstrahlung, mit einem Laser, einem Bauraum mit einer Trägereinrichtung zum Tragen des Objektes, und einem Beschichter zum Auftragen von pulverförmigen Schichten auf der Trägereinrichtung.

WO 2014/191200 A1 offenbart eine Anordnung mit einer Prozesskammer, einer in der Prozesskammer befindlichen Beschichtungsplattform und einer Rakeleinrichtung mit einem in der Prozesskammer befindlichen Rakelelement zum Aufrakeln eines Pulvers.

Der Erfindung liegt die Aufgabe zugrunde, eine Vorrichtung und ein zugehöriges Verfahren derart auszubilden, dass der gesamte Bauvorgang kürzer gestaltet werden kann. Dies wird durch eine Vorrichtung gemäß Anspruch 1 gelöst.

Als Kern der Erfindung wird es damit angesehen, Maßnahmen zu treffen, die eine sofortige Belichtungsaufnahme über vorzugsweise den gesamten Belichtungsbereich unmittelbar nach Ende eines Beschichtungsvorganges vorzunehmen oder zu starten. Dem Grunde nach kann bereits unmittelbar hinter dem während eines Beschichtungsvorganges in Auftragsrichtung laufenden Beschichterelement den Belichtungsvorgang zu beginnen, da aber Belichtungsvorgänge meist verteilt über die Baufläche oder große Abschnitte der Baufläche im Wege einer sogenannten "Island-Beschichtung" erfolgen, d. h. kleine Abschnitte belichtet werden, die zum Teil weit voneinander entfernt sind, um thermische Spannungen in einer Bauteilschicht zu vermeiden, ist es zweckdienlich, den Beschichter so zurückzuführen, dass vorzugsweise das gesamte Baufeld frei zur Belichtung zur Verfügung steht. Mit anderen Worten umfasst die Lehre des Patentanspruches 1 alle Rückführungsarten, bei denen das Beschichterelement oder weitere Elemente der Auftragsvorrichtung so geführt wird, dass ein Laserstrahl ungehindert durch ein den Strahl kreuzendes Beschichtungselement oder ein sonstiges Element der Auftragsvorrichtung freien Zugriff auf die Baufläche hat.

Die Ausweichbewegung umfasst vorteilhafter Weise eine Änderung der Raumlage des Beschichters bezogen auf die Raumlage des Beschichters beim Beschichtungsvorgang. Liegt beispielsweise der Beschichter oder das Beschichtungselement horizontal über der zu beschichtenden Fläche, dann ist mit einem Hochklappen, einem Wegschwenken, einem Herausdrehen aus dem Baufeld und dgl. eine Raumlagenänderung verbunden, die sich vorteilhaft auf die Beschleunigung des gesamten Bauprozesses auswirkt. Bei der Beschichterelementrückführung kann über einen oder mehrere Scanner eine gezielt und vollumfängliche Belichtung des gesamten Baufeldes begonnen werden.

Es ist auch möglich, das Beschichterelement im Wege der Ausweichbewegung seitlich linear aus dem Baufeld herauszufahren und seitlich vom Baufeld zurückzufahren. Dann kann eine ebene Lage des Beschichterelementes beibehalten werden, es wird nur seitlich vom Baufeld relativ viel Platz für die Rückführung beansprucht. Die Lineare Verschiebebewegung kann vorteilhafter Weise rechtwinkelig zur Auftragsrichtung verlängert, aber auch schräg angeordnet sein.

Zusätzlich zur Ausweichbewegung ist es für die Beschleunigung des Bauvorganges vorteilhaft, wenn bei der Ausweichbewegungen das Beschichterelement mit einer erhöhten Geschwindigkeit verglichen mit einer Schichtauftragsgeschwindigkeit bewegt wird. Dadurch wird der Rückführungsvorgang des Beschichterelementes verkürzt. Arbeitet dazu die Belichtungseinrichtung z. B. mit mehreren Scannern über dem Baufeld, dann sind die Belichtungsphasen und Beschichtungsphasen verkürzt.
Das Beschichterelement kann einseitig um wenigstens eine Achse verschwenkbar gelagert sein. Die Verschwenkung kann horizontal erfolgen oder eine Hochschwenkbewegung umfassen. Es ist auch möglich, am Ende eines Auftragsvorgangs das Beschichterelement gleichsam in Richtung der Auftragsbewegung über die Baufläche hinaus rotierend zu verschwenken rotierend um das Baufeld herum in die Ausgangslage zurückzuschwenken, sodass bei einem Auftragsvorgang zusammen mit dem Rückführungsvorgang das Beschichterelement wie ein Zeiger über einem Zifferblatt um 360° verschwenkt wird.

Erfindungsgemäß ist das Beschichterelement zur Rückführung in die Beschichtungsausgangslage am Ende des Beschichtungsvorganges von der Schicht der Bauebene abzuheben bzw. abgehoben und oberhalb einer Scanneranordnung der Belichtungsvorrichtung zurück in die Ausgangslage geführt. Die Rückführung kann zunächst eine Vertikalbewegung umfassen, sodann eine Horizontalbewegung über die Scanneranordnung hinweg in Richtung der Beschichtungsausgangslage und dann eine nach unten gerichtete Absenkbewegung. Genauso gut ist es aber auch möglich, den Beschichter unter Beibehaltung einer Parallellage zu seiner Beschichterlängsrichtung oder unter Hintzufügung von Beschichterelement-Schwenkbewegungen auf einer Bogenlinie über die Scanneranordnung hinweg zur Ausgangslage zurückzubringen.

Besonders vorteilhaft ist es, wenn der in der Ausweichbewegung befindliche Beschichter an einem Beschichterwechsler vorbeifährt und dort eine alte Beschichterklinge abgezogen und eine neue Beschichterklinge aufgeschoben wird. Dies kann vollautomatisch geschehen. Es können Beschichterklingen und Bürsten unterschiedlicher Art aufgesetzt werden, je nachdem was der Bauvorgang erfordert. Es liegt auch im Rahmen der Erfindung, anstelle eines Beschichters oder zusätzlich zu einem Beschichterelement ein Sensorelement an einen Träger der Auftragseinrichtung anzukoppeln und z. B. Messungen über dem Baufeld, wie Temperaturmessungen, eine Strahlkaustikmessung, Schichtoberflächenqualitätsmessungen und dgl. durchzuführen.

Die Erfindung ist anhand von Ausführungsbeispielen näher erläutert. Diese zeigen:
- Fig. 1: eine schematische Darstellung einer Vorrichtung zur Herstellung von dreidimensionalen Objekten, in der der Scannerstrahlraumbereich zwischen Scanner und Baufeld angedeutet ist;
- Fig. 2: eine Draufsicht auf einen Prozesskammerboden mit Baufeld, Dosierkammeröffnung und Überlauföffnung; (Stand der Technik)
- Fig. 3: eine schematische Darstellung von Beschichterelementbewegungen beim Auftrag einer Schicht mit einer erfindungsgemäßen Ausweichbewegung;
- Fig. 4: eine Darstellung ähnlich Fig. 3, bei der die Beschichterelementbewegungen ohne die Baufeldöffnungen dargestellt sind;
- Fig. 5: eine schematische Darstellung einer Beschichterelementanordnung, die um eine seitliche Schwenkachse hochschwenkbar ist;
- Fig. 6: eine Beschichterelementdarstellung beim Schichtauftrag und bei einer Ausweichbewegung, bei welcher das Beschichterelement außerhalb der Bauebene horizontal oder mit einer zusätzlichen Hochklappkomponente um 360° verschwenkt wird;
- Fig. 7: eine schematische Darstellung einer rechteckigen oder bogenförmigen Führung eines Beschichterelementes über eine Scanneranordnung hinweg.

Zunächst wird auf Zeichnungsfigur 1 Bezug genommen, um die erfindungsgemäße Vorrichtung allgemein vorzustellen.

Dort ist eine Vorrichtung 1 zum Herstellen von dreidimensionalen Objekten 14 durch aufeinanderfolgendes Verfestigen von Schichten eines mittels Strahlung verfestigbaren Aufbaumaterials 9 an den dem jeweiligen Querschnitt des Objektes entsprechenden Stellen schematisch dargestellt. Die Vorrichtung 1 weist ein Gehäuse 2 auf, das eine Prozesskammer 3 mit einem Prozesskammerboden 4 umschließt. Unter der Ebene des Prozesskammerbodens 4 sind eine Dosiereinrichtung 5 zum Zustellen von Aufbaumaterial 9 und ein Baubehälter 6 mit einer höhenverstellbaren Tragevorrichtung 7 angeordnet. Benachbart zum Baubehälter 6 ist unter der Ebene des Prozesskammerbodens 4 ein Überlaufbehälter 8 angeordnet. Die Dosiereinrichtung 5, der Baubehälter 6 und der Überlaufbehälter 8 sind oben offen, d.h. der Prozesskammerboden 4 weist über der Dosiereinrichtung 5, dem Baubehälter 6 und dem Überlaufbehälter 8 Öffnungen auf.

Die Öffnung des Baubehälters 6 ist mit Bezugszeichen 13 versehen, die Überlauföffnung des Überlaufbehälters 8 trägt das Bezugszeichen 15. Ein Beschichtungselement 11 einer Auftragsvorrichtung 12 verteilt das Aufbaumaterial 9 schichtweise auf der Baufläche.

Um das Aufbaumaterial 9, das auf die Tragevorrichtung 7 oder eine bereits verfestigte Schicht des Objektes 14 aufgetragen ist, zu verfestigen, ist eine Bestrahlungsvorrichtung vorgesehen, die einen Laser 16 und einen Scanner 17 umfasst. Beim dargestellten Ausführungsbeispiel ist die Bestrahlungsvorrichtung über der Prozesskammer 3 angeordnet, der von dem Scanner 17 kommende Laserstrahl 19 durchsetzt ein Fenster 18 in der Prozesskammerdecke.

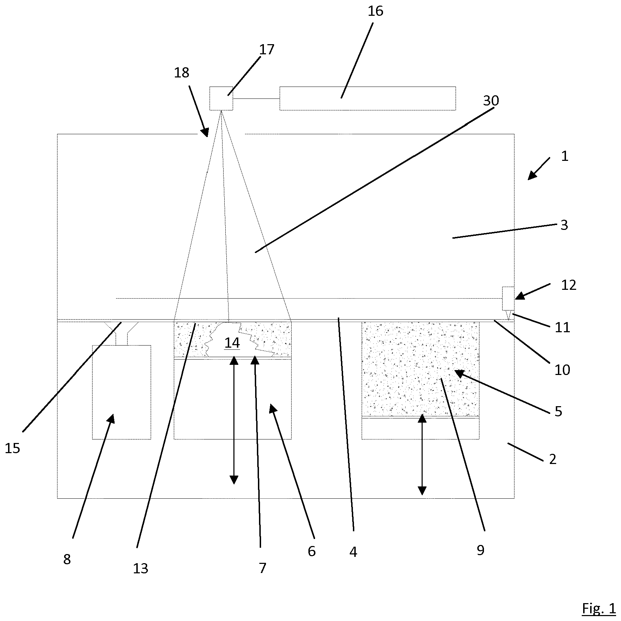

Über der Öffnung 13 des Baubehälters 6, die gleichsam die Baufläche definiert, ist zwischen dem Scanner 17 und der Öffnung 13 der Scannerstrahl-Raumbereich 30 angedeutet, das ist der Raumbereich, den ein Laserstrahl 19 bei maximaler Ablenkung bis zu den Kanten der Öffnung 13 einnimmt. Beim dargestellten Ausführungsbeispiel gemäß Fig. 1 ist nur ein Scanner 17 vorgesehen, d. h. der Scannerstrahl-Raumbereich 30 hat die Form einer spitzen Pyramide. Sind allerdings mehrere Scanner 17 vorgesehen, dann kann der Scannerstrahl-Raumbereich 30 auch eine andere Form haben, z. B. die Form eines Pyramidenstumpfes.

Nachfolgend wird auf Zeichnungsfigur 2 Bezug genommen. Dort ist in Draufsicht ein Prozesskammerboden 4 dargestellt, bei welchem ein Laufwagen einer herkömmlichen Aufbringvorrichtung 12 beidseitig auf Laufschienen 10 geführt ist, d. h. die Vor- und Rückbewegung bei dem Beschichtungsvorgang bzw. einem Rückführvorgang erfolgt immer auf der gleichen Linie. Das Beschichtungselement 11 und der Laufwagen kreuzen damit zwangsweise den über dem Baubehälter 6 liegenden Scannerstrahl-Raumbereich 30 bei der Rückführung des Beschichtungselementes 11 in eine Beschichtungsausgangslage.

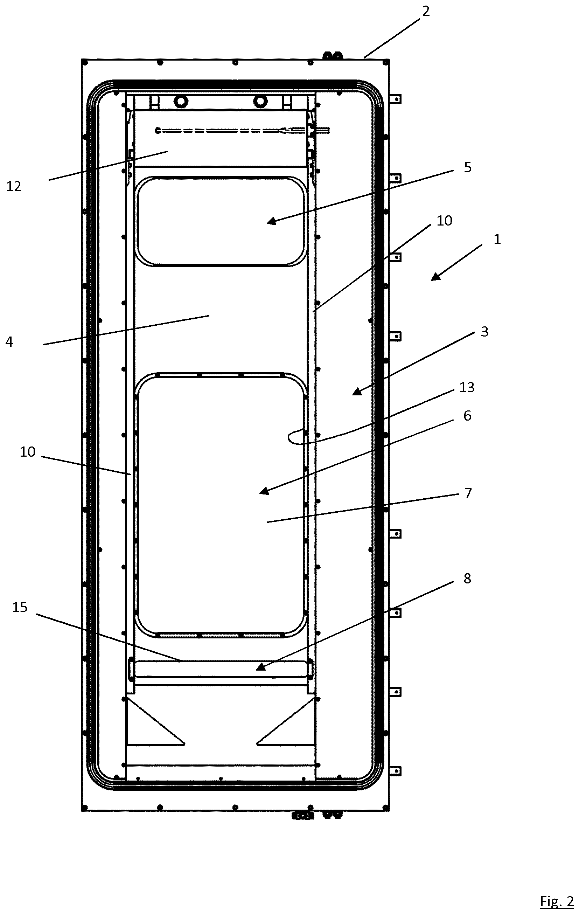

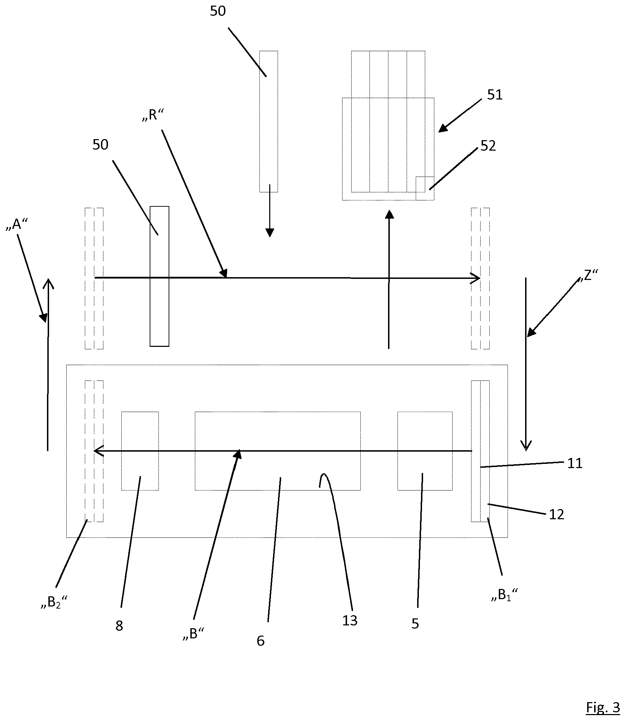

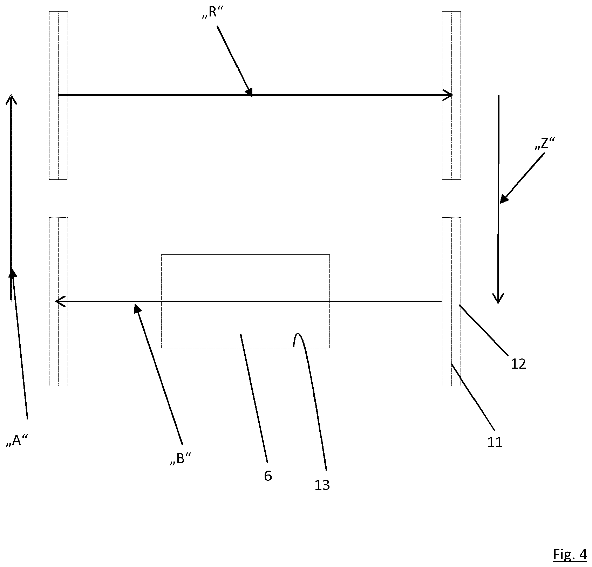

In Zeichnungsfigur 3 ist ähnlich Fig. 2 noch einmal der Prozesskammerboden 4 mit den Öffnungen der Dosiereinrichtung 5, des Baubehälters 6 und des Überlaufbehälters 8 dargestellt. Die Aufbringvorrichtung 12 mit dem darunter angeordneten Beschichterelement 11 ist in Pfeilrichtung über den Prozesskammerboden 4 geführt. Die Führung ist allerdings so vorgenommen, dass infolge einer Ausweichbewegung der gesamten Beschichteranordnung 12 der Scannerstrahl-Raumbereich 30, der über der Baukammer 6 liegt, frei bleibt. In Figur 3 ist angedeutet, dass die Auftragsvorrichtung 12 nach Beendigung des Beschichtungsvorganges B eine Ausweichbewegung A durchführt, daran schließt sich die Rückführbewegung R an und dann eine weitere Bewegung Z zum Zurückführen der Auftragsvorrichtung 12 und des Beschichterelementes 11 in die Ausgangsposition. Die Bewegungen Beschichten = B, Ausweichbewegung = A, Rückführbewegung = R und Zurückführen in die Ausgangslage = Z sind in Figur 4 noch einmal dargestellt.

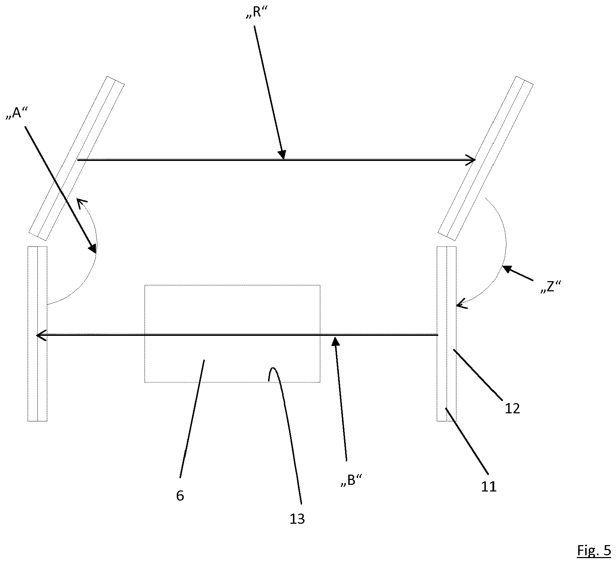

In Figur 5 ist ähnlich Figur 4 in Draufsicht nur die Baukammer 6 angedeutet. Die Auftragsvorrichtung 12 oder zumindest das Beschichtungselement 11 wird im Sinne einer Auftragsbewegung A hochgeschwenkt und vollzieht in hochgeschwenkter Stellung die Rückführbewegung R und kann dann im Sinne einer Zustellbewegung Z wieder in eine horizontale Stellung heruntergeklappt werden. Auch mit einer derartigen Ausweichbewegungsanordnung bleibt der Raumbereich der Scannerstrahl-Raumbereich 30 unbeeinflusst.

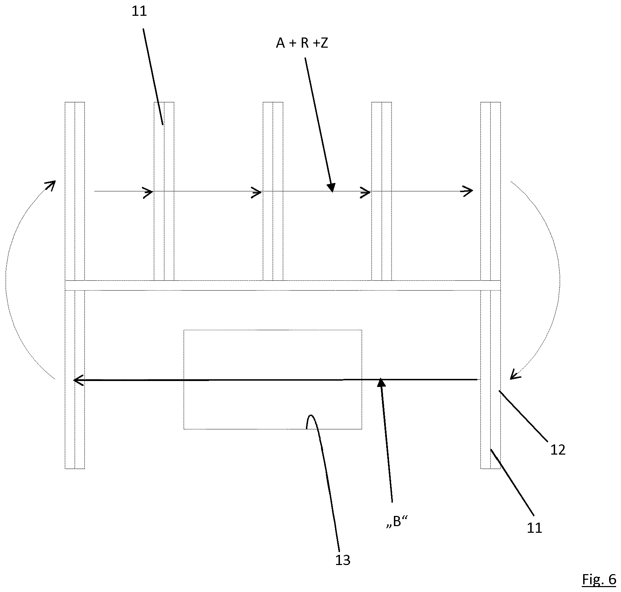

In Figur 6 ist eine weitere Möglichkeit gezeigt, das Beschichtungselement 11 ohne Störung des Scannerstrahl-Raumbereiches 30 zurückzuführen. Das Beschichtungselement 11 wird auf einem Laufwagen der Auftragsvorrichtung 12 z. B. auf einer einseitigen Schiene geführt. Nach Beendigung des Beschichtungsvorganges B wird im Sinne einer kombinierten Ausweich-Rückführ und Zurückführbewegung A, R, Z das Beschichtungselement 11 quasi wie ein Zeiger um 360° horizontal oder mit einer überlagernden Hochschwenkbewegung zurückgeführt in die Ausgangslage B1.

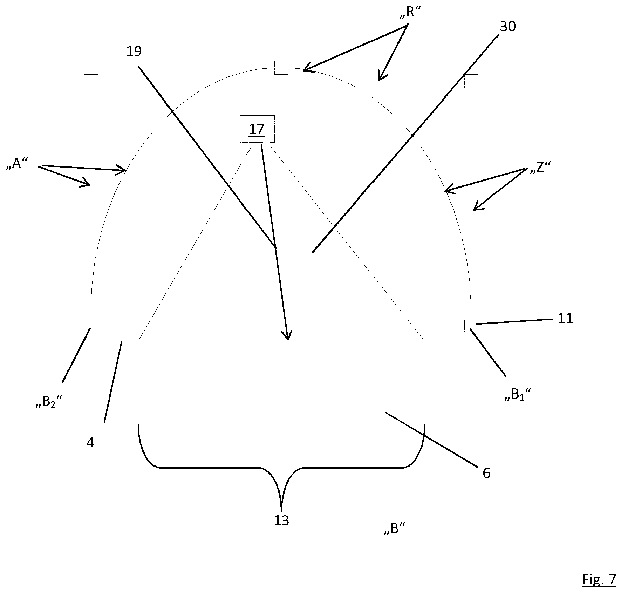

In Fig. 7 ist das Beschichtungselement 11 von der Seite gezeigt. Es wird beim Beschichtungsvorgang B von der Ausgangslage B1 zur Beschichtungsendlage B2 geführt und dann entweder rechteckig zunächst nach oben geführt zurück in die Ausgangslage des Beschichterelementes 11 (A,R,Z).

Die Bewegungen A, R und Z sind so gewählt, dass sie oberhalb eines Scanners 17 verlaufen und dadurch den gesamten Scannerstrahl-Raumbereich 30 unbeeinflusst lassen.

In Zeichnungsfigur 3 ist rein schematisch noch eine Reinigungsvorrichtung 50 dargestellt, bei welcher das Beschichterelement 11 bei seiner Rückführung in die Ausgangslage B1 gereinigt werden kann, z. B. abgespült, abgeblasen oder dgl. wird. Da dies entfernt von der Baukammer 6 erfolgt, wird der Bauprozess durch den Reinigungsvorgang nicht negativ beeinflusst.

Ebenfalls in Figur 3 ist ein Beschichterelementwechsler 51 angedeutet, der wie ein Magazin aufgebaut sein kann und eine Mehrzahl von gleichen oder unterschiedlichen Beschichterelementen 11 beinhaltet. Ein Beschichterelementträger kann im Zuge der Rückführung oder Ausweichbewegung mit einem neuen oder unterschiedlichen Beschichterelement 11 im Bereich des Beschichterelementwechslers 51 versehen werden.

Genauso ist es möglich, anstelle eines neuen Beschichterelementes 11 ein Sensorelement 52 zur Kaustikmessung oder dgl. an einem Beschichterelemtträger anzukoppeln, das ebenfalls im Beschichterelementwechsler 51 bereitgehalten werden kann.

### BEZUGSZEICHENLISTE

- 1: Vorrichtung
- 2: Gehäuse
- 3: Prozesskammer
- 4: Prozesskammerboden
- 5: Dosiereinrichtung
- 6: Baubehälter
- 7: Tragevorrichtung
- 8: Überlaufbehälter
- 9: Aufbaumaterial
- 10: Schiene
- 11: Beschichterelement
- 12: Auftragsvorrichtung
- 13: Öffnung v. 6
- 15: Öffnung v. 8
- 16: Laser
- 17: Scanner
- 18: Fenster
- 19: Laserstrahl

- 30: Scannerstrahl-Raumbereich

- 50: Reinigungsvorrichtung
- 51: Beschichterelementwechsler
- 52: Sensorelement

## Patentansprüche

1. Vorrichtung zum Herstellen von dreidimensionalen Objekten durch aufeinanderfolgendes Verfestigen von Schichten eines mittels Strahlung verfestigbaren Aufbaumaterials an dem den jeweiligen Querschnitt des Objektes entsprechenden Stellen, mit
- einem eine Prozesskammer umfassenden Gehäuse,
- einem darin untergebrachten Baubehälter,
- einer Bestrahlungsvorrichtung zum Bestrahlen von Schichten des Aufbaumaterials an den dem jeweiligen Querschnitt des Objektes entsprechenden Stellen,
- einer Aufbringvorrichtung zum Aufbringen der Schichten des Aufbaumaterials auf eine Tragevorrichtung im Baubehälter oder eine zuvor gebildete Schicht,
- einer Dosiereinrichtung zum Zuführen des Aufbaumaterials, wobei die Aufbringvorrichtung ein Beschichterelement umfasst, dass das von der Dosiereinrichtung zugeführte Aufbaumaterial als dünne Schicht in einem Auftragbereich entlang einer linearen Auftragbewegung verteilt, **dadurch gekennzeichnet, dass** das Beschichterelement am Ende eines Beschichtungsvorganges für eine Schicht bei der Rückführung des Beschichterelementes (11) in eine Beschichtungsausgangslage eine Ausweich- Rückführbewegung (A,R,Z) ausführt oder ausführen kann, bei welcher das Beschichterelement (11) den Scannerstrahl-Raumbereich (30) zwischen der Bestrahlungsvorrichtung (17) und einer aufgebrachten Schicht nicht kreuzt, wobei
- das Beschichterelement (11) zur Rückführung in die Beschichtungsausgangslage am Ende des Beschichtungsvorganges für eine Schicht von der Bauebene abgehoben und oberhalb einer Scanneranordnung (17) der Belichtungsvorrichtung zurück in die Beschichtungsausgangslage geführt ist.

2. Vorrichtung nach Anspruch 1, **dadurch gekennzeichnet, dass** die Raumlage des Beschichterelementes (11) im Zuge der Ausweich-Rückführbewegung (A,R,Z) von der Raumlage des Beschichterelementes (11) beim Beschichtungsvorgang (B) abweicht.

3. Vorrichtung nach Anspruch 1 oder 2, **dadurch gekennzeichnet, dass** die Ausweichbewegung (A,R,Z) eine zusätzliche lineare Verschiebebewegung des Beschichterelementes (11) umfasst die entlang einer zur Auftragsrichtung unterschiedlichen Richtung erfolgt.

4. Vorrichtung nach Anspruch 3, **dadurch gekennzeichnet, dass** die Richtung der zusätzlichen Ausweichbewegung (A) rechtwinkelig zur Verschieberichtung beim Schichtauftrag (B) verläuft.

5. Vorrichtung nach Anspruch 1, **dadurch gekennzeichnet, dass** das Beschichterelement (11) bei der Ausweich-Rückführbewegung (A,R,Z) mit einer erhöhten Geschwindigkeit verglichen mit einer SchichtAuftragsgeschwindigkeit (B) bewegt wird.

6. Vorrichtung nach einem der vorhergehenden Ansprüche, **dadurch gekennzeichnet, dass** bei der Ausweichbewegung das Beschichterelement (11) in eine zur Schichtebene der aufgetragenen Pulverschicht nicht parallele Lage überführbar ist.

7. Vorrichtung nach einem der vorhergehenden Ansprüche, **dadurch gekennzeichnet, dass** das Beschichtungselement (11) einseitig um wenigstens eine Achse verschwenkbar gelagert ist.

8. Vorrichtung nach einem der vorhergehenden Ansprüche, **dadurch gekennzeichnet, dass** die Ausweich-Rückführbewegung (A,R,Z) eine Hochschwenkbewegung des Beschichterelementes (11) umfasst.

9. Vorrichtung nach einem der vorhergehenden Ansprüche, **dadurch gekennzeichnet, dass** die Ausweich-Rückführbewegung (A,R,Z) eine Schwenkbewegung umfasst, bei der das Beschichterelement (11) außerhalb der zu belichtenden Baufläche rotierend um eine Schwenkachse geführt ist.

10. Vorrichtung nach einem der vorhergehenden Ansprüche, **dadurch gekennzeichnet, dass** das Beschichtungselement im Zuge der Ausweich-Rückführbewegung (A,R,Z) von einer Reinigungsvorrichtung (50) beaufschlagt wird.

11. Vorrichtung nach einem der vorhergehenden Ansprüche, **dadurch gekennzeichnet, dass** das Beschichterelement (11) im Zuge der Ausweich-Rückführbewegung (A,R,Z) durch einen Beschichterelementwechsler (51) austauschbar ist.

12. Vorrichtung nach einem der vorhergehenden Ansprüche, **dadurch gekennzeichnet, dass** an einer Halterung oder Führung des Beschichterelementes (11) wenigstens ein Sensorelement zur KaustikMessung der Laserstrahlqualität angeordnet ist, das bei einem Beschichtungsvorgang (B) oder Anstelle eines Beschichtungsvorganges über den zu beschichtenden Bereich eines Baufeldes führbar ist.

13. Vorrichtung nach Anspruch 12, **dadurch gekennzeichnet, dass** die Beschichtungselement-Wechselvorrichtung ein Wechselmagazin umfasst, in dem eine Mehrzahl von gleichen oder unterschiedlichen Beschichtungselementen und/oder eines Sensorelementes (52) zur Kaustikmessung bereitgehalten sind.

14. Vorrichtung nach einem der vorhergehenden Ansprüche, **dadurch gekennzeichnet, dass** das Beschichtungselement (11) bei der Ausweichbewegung (A) aus der zu beschichtenden Fläche des Baufeldes herausgeschwenkt und in dieser herausgeschwenkten Position in die Beschichtungsausgangslage zurückgeführt und in der Beschichtungsausgangslage in die Beschichtungsposition einschwenkbar ist.

15. Verfahren zum Herstellen von dreidimensionalen Objekten durch aufeinanderfolgendes Verfestigen von Schichten eines mittels Strahlung verfestigbaren Aufbaumaterials (9) an den dem jeweiligen Querschnitt des Objektes entsprechenden Stellen, mit folgenden Merkmalen:
- Vorsehen eines Gehäuses (2) mit einem darin angeordneten Baubehälter (6);
- Vorsehen einer Bestrahlungsvorrichtung (16, 17) zum Bestrahlen von Schichten des Aufbaumaterials (9) an dem jeweiligen Querschnitt des Objektes entsprechenden Stellen;
- Vorsehen einer Auftragsvorrichtung (12) zum Aufbringen der Schichten des Aufbaumaterials (9) auf eine Tragevorrichtung (7) im Baubehälter (6) oder eine zuvor gebildete Schicht;
- Vorsehen einer Dosiereinrichtung (5) zum Zuführen des Aufbaumaterials (9), wobei die Auftragsvorrichtung (12) ein Beschichterelement (11) umfasst, dass das von der Dosiereinrichtung (5) zugeführte Aufbaumaterial (9) als dünne Schicht in einen Auftragbereich entlang einer linearen Auftragbewegung (B) verteilt, **gekennzeichnet durch** Versetzen des Beschichterelementes in eine Ausweichbewegung (A) derart, dass das Beschichterelement bei seiner Rückführung (A,R,Z) in eine Beschichtungsausgangslage (B1) einen Scannerstrahl-Raumbereich (30) zwischen der Bestrahlungsvorrichtung (17) und einer aufgebrachten Schicht nicht kreuzt, wobei
- das Beschichterelement (11) zur Rückführung in die Beschichtungsausgangslage am Ende des Beschichtungsvorganges für eine Schicht von der Bauebene abgehoben und oberhalb einer Scanneranordnung (17) der Belichtungsvorrichtung zurück in die Beschichtungsausgangslage geführt ist.

16. Verfahren nach Anspruch 15, **dadurch gekennzeichnet, dass** zur Rückführung in die Beschichtungsausganglage (B1) das Beschichterelement (11) entweder hochgeklappt oder seitlich weggeklappt oder aus dem Scannerstrahl-Raumbereich (30) seitlich herausgefahren oder herausgeschwenkt wird.

## Claims

1. Apparatus for producing three-dimensional objects by successively solidifying layers of a building material that can be solidified by means of radiation at the locations corresponding to the respective cross section of the object, with
- a housing comprising a process chamber,
- a building container accommodated therein,
- an irradiation apparatus for irradiating layers of the building material at the locations corresponding to the respective cross section of the object,
- an application apparatus for applying the layers of the building material to a supporting apparatus in the building container or to a previously formed layer,
- a metering device for supplying the building material, wherein the application apparatus comprises a coater element, which distributes the building material supplied by the metering device as a thin layer in an application area along a linear application movement, **characterised in that**, at the end of a coating process for one layer, upon the return of the coater element (11) to a coating starting position, the coater element executes or can execute an evasion/return movement (A, R, Z), in which the coater element (11) does not cross the scanner beam spatial area (30) between the irradiation apparatus (17) and an applied layer, wherein
- at the end of the coating process for one layer, the coater element (11) is raised from the building plane for return to the coating starting position and is guided above a scanner arrangement (17) of the exposure apparatus back to the coating starting position.

2. Apparatus according to claim 1, **characterised in that** the spatial position of the coater element (11) in the course of the evasion/return movement (A, R, Z) deviates from the spatial position of the coater element (11) during the coating process (B).

3. Apparatus according to claim 1 or 2, **characterised in that** the evasion movement (A, R, Z) comprises an additional linear displacement movement of the coater element (11) that takes place along a direction different from the application direction.

4. Apparatus according to claim 3, **characterised in that** the direction of the additional evasion movement (A) runs perpendicular to the displacement direction during layer application (B).

5. Apparatus according to claim 1, **characterised in that** the coater element (11) is moved during the evasion/return movement (A, R, Z) at an increased speed compared with a layer application speed (B).

6. Apparatus according to any one of the preceding claims, **characterised in that** during the evasion movement the coater element (11) can be transferred into a position not parallel to the layer plane of the applied powder layer.

7. Apparatus according to any one of the preceding claims, **characterised in that** the coater element (11) is unilaterally supported swivellably about at least one axis.

8. Apparatus according to any one of the preceding claims, **characterised in that** the evasion/return movement (A, R, Z) comprises an upward swivel movement of the coater element (11).

9. Apparatus according to any one of the preceding claims, **characterised in that** the evasion/return movement (A, R, Z) comprises a swivel movement in which the coater element (11) is guided rotating about a swivel axis outside of the building area to be exposed.

10. Apparatus according to any one of the preceding claims, **characterised in that** the coater element is acted upon by a cleaning apparatus (50) in the course of the evasion/return movement (A, R, Z).

11. Apparatus according to any one of the preceding claims, **characterised in that** the coater element (11) is exchangeable by a coater element changer (51) in the course of the evasion/return movement (A, R, Z).

12. Apparatus according to any one of the preceding claims, **characterised in that** there is arranged on a bracket or guide of the coater element (11) at least one sensor element for caustic measurement of the laser beam quality, which element can be guided during a coating process (B) or in place of a coating process over the area of a building field to be coated.

13. Apparatus according to claim 12, **characterised in that** the coater element changer apparatus comprises a changing magazine, in which a plurality of identical or different coater elements and/or a sensor element (52) for caustic measurement are held.

14. Apparatus according to any one of the preceding claims, **characterised in that** the coater element (11) is swivelled during the evasion movement (A) out of the area of the building field to be coated and is guided back to the coating starting position in this swivelled-out position and can be swivelled into the coating position in the coating starting position.

15. Method for producing three-dimensional objects by successively solidifying layers of a building material (9) that can be solidified by means of radiation at the locations corresponding to the respective cross section of the object, with the following features:
- provision of a housing (2) with a building container (6) arranged therein;
- provision of an irradiation apparatus (16, 17) for irradiating layers of the building material (9) at locations corresponding to the respective cross section of the object;
- provision of an application apparatus (12) for applying the layers of the building material (9) to a supporting apparatus (7) in the building container (6) or to a previously formed layer;
- provision of a metering device (5) for supplying the building material (9), wherein the application apparatus (12) comprises a coater element (11), which distributes the building material (9) supplied by the metering device (5) as a thin layer in an application area along a linear application movement (B), **characterised by** transfer of the coater element to an evasion movement (A) so that, upon its return (A, R, Z) to a coating starting position (B1), the coater element does not cross a scanner beam spatial area (30) between the irradiation apparatus (17) and an applied layer, wherein
- at the end of the coating process for one layer, the coater element (11) is raised from the building plane for return to the coating starting position and is guided above a scanner arrangement (17) of the exposure apparatus back to the coating starting position.

16. Method according to claim 15, **characterised in that** to return to the coating starting position (B1), the coater element (11) is either folded up or folded away to the side or is moved or swivelled laterally out of the scanner beam spatial area (30).

## Revendications

1. Dispositif servant à fabriquer des objets tridimensionnels par solidification consécutive de couches d'un matériau de construction pouvant se solidifier au moyen d'un rayonnement au niveau d'emplacements correspondant à la section transversale respective de l'objet, avec
- un boîtier comprenant une chambre de processus,
- un contenant de construction abrité dans celui-ci,
- un dispositif d'irradiation servant à irradier des couches du matériau de construction au niveau des emplacements correspondant à la section transversale respective de l'objet,
- un dispositif d'application servant à appliquer les couches du matériau de construction sur un dispositif de support dans le contenant de construction ou une couche obtenue au préalable,
- un système de dosage servant à amener le matériau de construction, dans lequel le dispositif d'application comprend un élément applicateur de revêtement, qui répartit le matériau de construction amené par le système de dosage en tant que couche fine dans une zone d'application le long d'un déplacement d'application linéaire, **caractérisé en ce que** l'élément applicateur de revêtement exécute ou peut exécuter à la fin d'une opération de revêtement pour une couche lors du retour de l'élément applicateur de revêtement (11) dans une position de départ de revêtement, un mouvement de retour d'écartement (A,R,Z), où l'élément applicateur de revêtement (11) ne croise pas la zone spatiale de rayon de balayage (30) entre le dispositif d'irradiation (17) et une couche appliquée, dans lequel
- l'élément applicateur de revêtement (11) est relevé du plan de construction aux fins du retour dans la position de départ de revêtement à la fin de l'opération de revêtement pour une couche et est guidé au-dessus d'un ensemble de balayage (17) du dispositif d'exposition à la lumière pour revenir dans la position de départ de revêtement.

2. Dispositif selon la revendication 1, **caractérisé en ce que** la position spatiale de l'élément applicateur de revêtement (11) s'écarte dans le cadre du mouvement de retour d'écartement (A,R,Z) de la position spatiale de l'élément applicateur de revêtement (11) lors de l'opération de revêtement (B).

3. Dispositif selon la revendication 1 ou 2, **caractérisé en ce que** le mouvement d'écartement (A,R,Z) comprend un mouvement de coulissement linéaire supplémentaire de l'élément applicateur de revêtement (11), qui est effectué le long d'une direction différente par rapport à la direction d'application.

4. Dispositif selon la revendication 3, **caractérisé en ce que** la direction du mouvement d'écartement (A) supplémentaire s'étend à angle droit par rapport à la direction de coulissement lors de l'application de couche (B).

5. Dispositif selon la revendication 1, **caractérisé en ce que** l'élément applicateur de revêtement (11) est déplacé lors du mouvement de retour d'écartement (A,R,Z) à une vitesse plus élevée en comparaison avec une vitesse d'application de couche (B).

6. Dispositif selon l'une quelconque des revendications précédentes, **caractérisé en ce que** lors du mouvement d'écartement, l'élément applicateur de revêtement (11) peut être transféré dans une position non parallèle par rapport au plan de couche de la couche de poudre appliquée.

7. Dispositif selon l'une quelconque des revendications précédentes, **caractérisé en ce que** l'élément de revêtement (11) est monté de manière à pouvoir pivoter d'un côté autour d'au moins un axe.

8. Dispositif selon l'une quelconque des revendications précédentes, **caractérisé en ce que** le mouvement de retour d'écartement (A,R,Z) comprend un mouvement de pivotement vers le haut de l'élément applicateur de revêtement (11).

9. Dispositif selon l'une quelconque des revendications précédentes, **caractérisé en ce que** le mouvement de retour d'écartement (A,R,Z) comprend un mouvement de pivotement, où l'élément applicateur de revêtement (11) est guidé à l'extérieur de la surface de construction à exposer à la lumière en rotation autour d'un axe de pivotement.

10. Dispositif selon l'une quelconque des revendications précédentes, **caractérisé en ce que** l'élément de revêtement est soumis à l'action d'un dispositif de nettoyage (50) dans le cadre du mouvement de retour d'écartement (A,R,Z).

11. Dispositif selon l'une quelconque des revendications précédentes, **caractérisé en ce que** l'élément applicateur de revêtement (11) peut être remplacé par un changeur d'élément applicateur de revêtement (51) dans le cadre du mouvement de retour d'écartement (A,R,Z).

12. Dispositif selon l'une quelconque des revendications précédentes, **caractérisé en ce qu'**est disposé au niveau d'une fixation ou d'un guidage de l'élément applicateur de revêtement (11) au moins un élément de capteur de mesure de caustique de la qualité de rayon laser, qui peut être guidé lors d'une opération de revêtement (B) ou au lieu d'une opération de revêtement au-dessus de la zone à exposer à la lumière d'un secteur de construction.

13. Dispositif selon la revendication 12, **caractérisé en ce que** le dispositif de changement d'élément de revêtement comprend un magasin de changement, dans lequel une multitude d'éléments de revêtement identiques ou différents et/ou un élément de capteur (52) se tiennent prêts aux fins de la mesure de caustique.

14. Dispositif selon l'une quelconque des revendications précédentes, **caractérisé en ce que** l'élément de revêtement (11) est pivoté lors du mouvement d'écartement (A) pour sortir de la surface à exposer à la lumière du secteur de construction et, dans ladite position de sortie par pivotement, est ramené dans la position de départ de revêtement et, dans la position de départ de revêtement, est ramené par pivotement dans la position de revêtement.

15. Procédé servant à fabriquer des objets tridimensionnels par solidification successive de couches d'un matériau de construction (9) pouvant se solidifier au moyen d'un rayonnement au niveau des emplacements correspondant à la section transversale respective de l'objet, avec des caractéristiques suivantes :
- la prévision d'un boîtier (2) avec un contenant de construction (6) disposé dans celui-ci ;
- la prévision d'un dispositif d'irradiation (16, 17) servant à irradier des couches du matériau de construction (9) au niveau d'emplacements correspondant à la section transversale respective de l'objet ;
- la prévision d'un dispositif d'application (12) servant à appliquer des couches du matériau de construction (9) sur un dispositif de support (7) dans le contenant de construction (6) ou une couche obtenue au préalable ;
- la prévision d'un système de dosage (5) servant à amener le matériau de construction (9), dans lequel le dispositif d'application (12) comprend un élément applicateur de revêtement (11), qui répartit le matériau de construction (9) amené par le système de dosage (5) en tant que couche fine dans une zone d'application le long d'un mouvement d'application (B) linéaire, **caractérisé par** le déplacement de l'élément applicateur de revêtement en un mouvement d'écartement (A) de telle manière que l'élément applicateur de revêtement ne croise pas, lors de son retour (A,R,Z) dans une position de départ de revêtement (B1), une zone spatiale de rayon de balayage (30) entre le dispositif d'irradiation (17) et une couche appliquée, dans lequel
- l'élément applicateur de revêtement (11) est relevé du plan de construction aux fins du retour dans la position de départ de revêtement à la fin de l'opération de revêtement pour une couche et est guidé au-dessus d'un ensemble de balayage (17) du dispositif d'application pour revenir dans la position de départ de revêtement.

16. Procédé selon la revendication 15, **caractérisé en ce que** pour revenir dans la position de départ de revêtement (B1), l'élément applicateur de revêtement (11) est soit rabattu vers le haut soit retiré par rabattement latéral soit est sorti ou sorti par pivotement latéralement de la zone spatiale de rayon de balayage (30).
